# EUROPEAN PATENT SPECIFICATION

(11) **EP 4 545 320 B1**
(45) Date of publication and mention of the grant of the patent: **09.09.2026**
(21) Application number: 24207124.9
(22) Date of filing: 17.10.2024
(51) Int. Cl.: B60G 11/26, B60G 17/056, B60G 17/017, F16F 9/08

(54) **METHOD FOR MANAGING HYDRAULIC SUSPENSIONS OF AN AGRICULTURAL VEHICLE**
VERFAHREN ZUR VERWALTUNG VON HYDRAULISCHEN AUFHÄNGUNGEN EINES LANDWIRTSCHAFTLICHEN FAHRZEUGS
PROCÉDÉ DE GESTION DE SUSPENSIONS HYDRAULIQUES D'UN VÉHICULE AGRICOLE

(30) Priority: 23.10.2023 IT 202300022137
(43) Date of publication of application: 30.04.2025
(73) Proprietor: CNH Industrial Italia S.p.A., 10156 Torino (IT)
(72) Inventor: Vighi, Alessia, 10156 Turin (IT); Gaiola, Andrea, 10156 Turin (IT)
(74) Representative: CNH Industrial IP Department

(56) References cited:
- CA-C- 2 528 670
- US-A1- 2018 229 570
- US-B2- 7 530 434

## Description

### Field of the invention

The present invention relates to the field of agricultural vehicles and in particular to a method of managing the hydraulic suspensions of an agricultural vehicle.

### State of the art

Agricultural vehicles are often equipped with hydraulic suspensions. US 2018/229570 A1 discloses an agricultural vehicle according to the preamble of claim 1 and a method of operating an agricultural vehicle and controlling a height-adjustable hydraulic suspension system of said agricultural vehicle according to the preamble of claim 10.

At least one double-acting hydraulic actuator is provided to raise or lower the vehicle body with respect to the ground. In particular, to lift the vehicle it is necessary to send oil to the piston chamber and allow the rod chamber to empty, while to lower the vehicle, it is necessary to send oil to the rod chamber and allow the piston chamber to empty.

The emptying chamber is operationally connected to a hydraulic oil collection tank, from which a hydraulic pump is arranged to draw oil and send it to the filling chamber.

Since hydraulic oil is incompressible, in order to dampen ground stress, the pressurized circuit is connected to a hydraulic accumulator.

However, if one wants to lower or raise the vehicle completely he risks respectively overemptying or overfilling the chamber, which he empties or fills with the risk of damage it.

Furthermore, when the vehicle is completely lowered and the piston chamber is completely empty, the corresponding hydraulic accumulator is completely depressurized, therefore, in such conditions when the operator commands the lifting of the vehicle, the response is slow because the hydraulic pump must simultaneously send the hydraulic oil to the piston chamber and its hydraulic accumulator.

According to some experiments conducted, the vehicle could start to lift seven seconds after the operator's lifting command.

To avoid these problems, according to a strategy used by the present applicant, it is envisaged to allow a height range ranging from 5% to 95%, in the sense that it is not possible to completely lower or raise the vehicle, leaving the vehicle raised at least 5 % and maximum at 95% of the total stroke of the hydraulic suspension, respectively in case of total lowering or total lifting request.

This solution is also not optimal, because the operator notices that the vehicle does not respond adequately to his commands.

Unless specifically excluded in the detailed description that follows, what is described in this chapter is to be considered as an integral part of the detailed description.

### Summary if the invention

The aim of the present invention is to improve the response of the vehicle without compromising the durability of the hydraulic accumulators associated with the chambers of the hydraulic actuator of a vehicle suspension.

The basic idea of the present invention is to provide a control valve for the connection of the hydraulic accumulator associated with one of the chambers of the hydraulic actuator and to provide for isolating the hydraulic accumulator when, during emptying of the hydraulic accumulator , the height of the vehicle reaches a predetermined threshold, close to the minimum height or the maximum height of the vehicle from the ground.

For example, if the hydraulic accumulator is associated with the piston chamber, the control valve is controlled to isolate the hydraulic accumulator when the height of the vehicle is reduced until it reaches a first predetermined threshold, close to the minimum height of the vehicle from the ground.

Similarly, a valve may be provided to control the connection of the hydraulic accumulator associated with the rod chamber and in which the valve is controlled so as to isolate the hydraulic accumulator associated with the rod chamber when the height of the vehicle, by increasing, reaches a second predetermined threshold, close to the maximum height of the vehicle from the ground.

This, advantageously, allows to avoid completely discharging the hydraulic accumulators by having a prompt response when the opposite command is given, for example, lifting after a complete lowering, since the source of hydraulic oil, in the first stages of filling the fully contracted hydraulic chamber of the actuator, is not requested to pressurize also the hydraulic accumulator.

According to a preferred aspect of the invention, when both chambers of the actuator are equipped with a respective hydraulic accumulator, both hydraulic accumulators are isolated when the first or second predetermined threshold is reached.

Advantageously, this prevents the accumulator connected to the contracting actuator chamber from being damaged by excessive pressurization.

In fact, when the actuator reaches the end of travel, the pressure in the dilated chamber increases considerably.

Furthermore, in response to a command to raise and lower the vehicle, which follows a previous command of complete lowering and raising respectively, the previously isolated accumulator is reconnected to the circuit ensuring a quicker response of the suspension system as the accumulators are not completely discharged.

The same strategy can be implemented for the accumulator connected to the expanding chamber: for example, if the operator commands the complete lifting of the vehicle, the piston chamber expands completely and the pressure inside can exceed a threshold such as to damage the relevant accumulator. According to a preferred aspect of the present invention, the accumulator connected to the piston chamber can also be isolated when the height of the vehicle exceeds a predetermined threshold, so as to prevent it from being damaged.

Preferably, the hydraulic accumulators are isolated when the height of the vehicle from the ground is 5 - 10% of the maximum height in the complete lowering phase and 90 - 95% of the maximum height in the complete lifting phase.

In other words, hydraulic accumulators are connected in the range between 5 and 95% (or 10 and 10%) of the maximum height and disconnected outside.

The dependent claims describe preferred variants of the invention, forming an integral part of the present description.

### Brief description of the figures

Further objects and advantages of the present invention will be clear from the following detailed description of an example of its implementation (and its variants) and from the attached drawings given purely for explanatory and non-limiting purposes, in which:

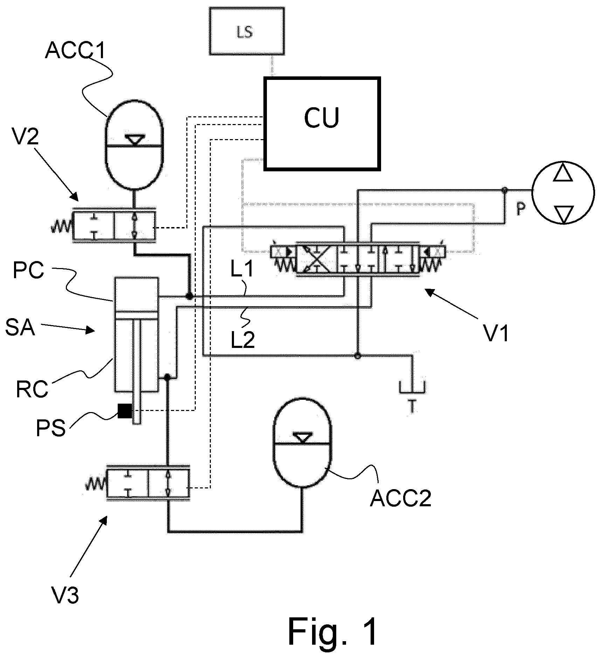

Fig. 1 shows a diagram of an electro-hydraulic suspension control system;
Fig. 2a a control flow diagram of the system of figure 1 is shown and in Fig. 2b a further control flow diagram of the system for carrying out an optional part of the method of the present invention is shown;
Fig. 3 shows an agricultural vehicle implementing the system of Fig. 1.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description

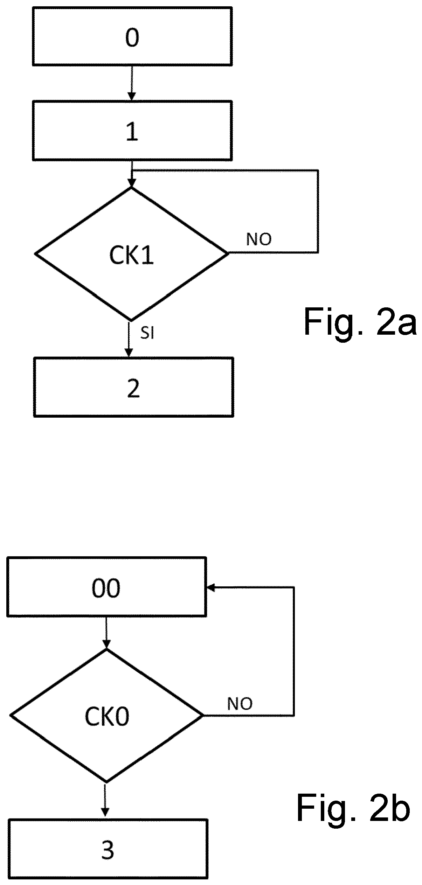

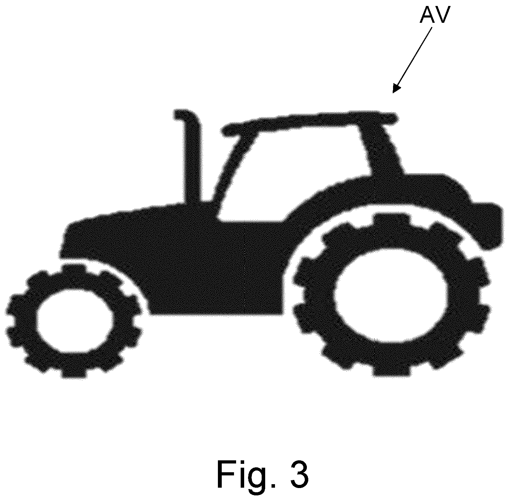

Fig. 3 refers to an agricultural vehicle AV comprising an adjustable height hydraulic suspension system as shown in Fig. 2.

The adjustable hydraulic suspension system includes a double-acting actuator SA, equipped, as is known, with a first chamber PC and a second chamber RC, opposed to each other and therefore arranged alternately to expand and contract, causing the vehicle to lift or lower.

For example, when the piston chamber expands, the rod chamber contracts, causing the vehicle to lift. Conversely, when the piston chamber contracts and the rod chamber expands, then the vehicle lowers.

The suspension control system evidently includes a source of pressurized hydraulic oil P, generally a hydraulic pump, arranged to draw oil from a collection tank T.

A control valve V1 allows to alternatively connect the first or second chamber with the source of hydraulic oil P and at the same time respectively the second or first chamber with the collection tank to collect the oil released by the contracting chamber.

Connection lines L1, L2 are arranged, i.e. hydraulic lines to connect each between the first and second chamber with the control valve V1.

In order to dampen the mechanical connection between the wheels and the vehicle chassis, a hydraulic accumulator ACCC1, ACC2 is operationally connected to each of the hydraulic lines. It, in a known way, comprises an elastic membrane, which separates a closed container into two chambers, one intended to contain hydraulic oil and communicating with the respective connection lines L1, L2 and the other intended to contain a compressible fluid or a resilient means as a spring.

According to the present invention, a valve V2, V3 is arranged between the hydraulic accumulator and the respective line L1, L2, to isolate the hydraulic accumulator from it and therefore from the corresponding chamber of the hydraulic cylinder.

According to the present invention, the vehicle is equipped with processing means CU configured to control the complete contraction of one of said first or second chambers in response to a command signal to completely raise or lower the vehicle, and to control the isolation valve V2, V3, so as to isolate the corresponding hydraulic accumulator when a vehicle height value reaches a first predetermined threshold Th1, Th2.

For example, the hydraulic accumulator ACC1 is operationally connected with the first chamber, i.e. the piston chamber, and in which said processing means CU are configured to isolate the hydraulic accumulator ACC1, when, during lowering of the vehicle, the vehicle height value reaches said predetermined threshold Th1. The threshold is between 5% and 10% of the value corresponding to the maximum height of the vehicle, however different threshold values can be selected at which the hydraulic accumulator is isolated.

Similarly, the hydraulic accumulator ACC2 is operationally connected with the second chamber, i.e. the rod chamber and the processing means CU are configured to isolate the hydraulic accumulator ACC2, when, during lifting of the vehicle, the value of vehicle height reaches said predetermined threshold Th2. The threshold, in this case, is between 90% and 95% of the value corresponding to the maximum height of the vehicle.

Evidently when the vehicle is equipped with two hydraulic accumulators, i.e. one for each of the lines L1 and L2, the accumulator corresponding to the chamber that contracts is certainly isolated and more preferably also the accumulator of the chamber that expands is isolated.

Advantageously, the insulation of the accumulator of the chamber which contracts completely allows a prompt reaction of the vehicle when, following the contraction, the operator delivers the opposite command which causes the same chamber to dilate, while the insulation of the accumulator of the chamber which expands completely allows to avoid damage to the accumulator itself.

According to a preferred aspect of the invention, a position sensor PS associated with the rod of the hydraulic cylinder SA and the processing means are configured, at the end of the complete lowering or raising procedure, to connect the fully contracted chamber with the source of pressurized hydraulic oil P until a minimal appreciable change in vehicle height is detected.

From an operational point of view, the vehicle remains in the position selected by the operator, however, the circuit is pre-pressurized to be faster in responding to a subsequent lifting or lowering command respectively.

Alternatively, it is possible to set a pre-pressurization pressure value of the hydraulic line such as to reach a predetermined pressure value approximately equal to a pressure value such as to equal the weight of the vehicle, so as not to cause any variation in the vehicle height from the ground.

The isolation valve is preferably an ON/OFF type valve.

Fig. 2a shows an example of a representative flow diagram of the method of the present invention:
- Step 0: receiving a lifting/lowering command;
- Step 1: carrying out lifting/lowering and simultaneously monitoring the vehicle height;
- CK1: checking whether the height of the vehicle exceeds a predetermined upper threshold in the case of lifting or a predetermined lower threshold in the case of lowering; in negative case, the checking continues in loop, while in positive case
- Step 2: Isolation of the corresponding hydraulic accumulator ACC1, ACC2.

Preferably, step 2 includes the isolation of both hydraulic accumulators.

The method optionally includes, with reference to Fig. 2b, the new pressurization procedure of the line corresponding to the contracted chamber with the following steps:
- Step 00: monitoring the end of the lifting or lowering procedure;
- CK2: checking whether the lifting or lowering is complete, if not returning to the previous step (Step 00), otherwise:
- Step 3: execution of the new pressurization procedure of the line corresponding to the contracted chamber.

As described above, new pressurization is performed by monitoring the excursion of the cylinder rod, in the sense that it is stopped when the minimum appreciable variation in the relative position is detected.

The present invention can advantageously be carried out by means of a computer program, which includes coding means for carrying out one or more steps of the method, when this program is executed on a computer. Constructive variations to the non-limiting example described are possible, without departing from the scope of protection of the present invention, the invention being defined by the claims.

From the above description, the person skilled in the art is able to realize the object of the invention without introducing further construction details.

## Claims

1. An agricultural vehicle comprising a height-adjustable hydraulic suspension system comprising
- a double-acting actuator (SA), comprising a first (PC) and a second chamber (RC) arranged alternately to expand and contract, causing the vehicle to raising or lowering,
- a source of pressurized hydraulic oil (P),
- a valve (V1) to control the alternate connection of said first or second chamber with said source of hydraulic oil (P),
- connection means (L1, L2) to connect each of said first and second chambers to said control valve (V1),
- at least one hydraulic accumulator (ACCC1, ACC2) operationally connected to one of said first or second chamber,
- a isolation valve (V2, V3) for isolating said first hydraulic accumulator,
- Processing means (CU) configured to control the contraction of one of said first or second chambers in response to a command signal to completely raise or lower the vehicle, the vehicle being **characterised in that** the processing means are configured to control said isolation valve (V2, V3), so as to isolate said hydraulic accumulator when a vehicle height value reaches a first predetermined threshold (Th1, Th2).

2. The vehicle according to claim 1, wherein said hydraulic accumulator (ACC1) is operatively connected with said first chamber and wherein said first chamber is a piston chamber, and wherein said processing means (CU) is configured to isolate said hydraulic accumulator, when, during the vehicle lowering phase, the height value of the vehicle reaches said predetermined threshold (Th1).

3. The vehicle according to claim 1, wherein said hydraulic accumulator (ACC2) is operatively connected with said second chamber and wherein said second chamber is a rod chamber, and wherein said processing means (CU) is configured to isolate said hydraulic accumulator, when, during vehicle lifting, the vehicle height value reaches said predetermined threshold (Th2).

4. The vehicle according to claim 2, further comprising a further hydraulic accumulator (ACC2) operatively connected with said second chamber and wherein said second chamber is a rod chamber, and wherein said processing means (CU) is configured to isolate said hydraulic accumulator and said further hydraulic accumulator when, in the lowering phase and in the lowering phase of the vehicle, the height value of the vehicle reaches said predetermined threshold (Th1, Th2) .

5. Vehicle according to claim 2, wherein said threshold is between 5% and 10% of the value corresponding to the maximum height of the vehicle.

6. Vehicle according to claim 3, wherein said threshold is between 90% and 95% of the value corresponding to the maximum height of the vehicle.

7. Vehicle according to any of the preceding claims, wherein in response to achieving a complete lowering or raising of the vehicle, said processing means is configured to connect the fully contracted chamber, between said first and second chambers, with said oil source hydraulic (P) pressurized until a minimal appreciable variation in the height of the vehicle is detected.

8. The vehicle according to claim 7, further comprising a position sensor (PS) of the stem of said hydraulic actuator and wherein said processing means are operatively connected with said position sensor to detect said minimum appreciable variation in vehicle height.

9. Vehicle according to any of the preceding claims 1 - 6, wherein in response to achieving said complete lowering or raising of the vehicle, said processing means is configured to connect the contracted chamber, between said first and second chambers, and to connect it with said source of hydraulic oil (P) pressurized until a predetermined pressure value is detected inside the contracted chamber.

10. Method of operating an agricultural vehicle and controlling a height-adjustable hydraulic suspension system of said agricultural vehicle, the vehicle comprising
- a double-acting actuator (SA), comprising a first (PC) and a second chamber (RC) arranged alternately to expand and contract, causing the vehicle to be raised or lowered,
- a source of pressurized hydraulic oil (P),
- a valve (V1) to control the alternating power supply of each of said first and second chambers,
- connection means (L1, L2) to connect each of said first and second chambers to said control valve (V1),
- at least one hydraulic accumulator (ACCC1, ACC2) operationally connected to one of said first or second chamber,
- a isolation valve (V2, V3) for isolating said first hydraulic accumulator,
the method including the following steps:
- (Step 1) receiving a signal indicating a raising or lowering of the vehicle,
- (Step 2) contraction of one of said first or second chambers in response to the reception of said signal, the method being **characterised by** the following step :
- (Step 3) isolation of the hydraulic accumulator, by means of said isolation valve, when a vehicle height value reaches a first predetermined threshold (Th1, Th2).

11. Method according to claim 10, further comprising a verification step (CK1) that the current value of the vehicle height is different from the value corresponding to the complete raising (or lowering) of the vehicle at the instant of reception of said signal indicating the lifting (or lowering) of the vehicle and only in case of positive verification said contraction step is executed.

12. Method according to claim 11, further comprising a step (Step 4), following the complete lifting (or lowering) of the vehicle, of connecting the contracted chamber, between said first and second chambers, with said source of pressurized hydraulic oil (P) until a minimal appreciable change in vehicle height is detected.

13. A computer program comprising instructions for causing the processing means of the agricultural vehicle of claim 1 to implement the method model of claim 11.

14. A computer readable medium having stored the program of claim 13.

## Patentansprüche

1. Landwirtschaftliches Fahrzeug, umfassend ein höhenverstellbares hydraulisches Aufhängungssystem, umfassend
- einen doppeltwirkenden Stellantrieb (SA), umfassend eine erste (PC) und eine zweite Kammer (RC), die so angeordnet sind, dass sie sich abwechselnd ausdehnen und zusammenziehen, was ein Anheben oder Absenken des Fahrzeugs bewirkt,
- eine Quelle für unter Druck stehendes Hydrauliköl (P),
- ein Ventil (V1) zum Steuern der abwechselnden Verbindung der ersten oder zweiten Kammer mit der Hydraulikölquelle (P),
- Verbindungsmittel (L1, L2) zum Verbinden jeder der ersten und zweiten Kammer mit dem Steuerventil (V1),
- mindestens ein hydraulischer Druckspeicher (ACCC1, ACC2), der mit einer der ersten oder zweiten Kammer wirkverbunden ist,
- ein Absperrventil (V2, V3) zum Trennen des ersten hydraulischen Druckspeichers,
- Verarbeitungsmittel (CU), das konfiguriert ist, um die Kontraktion einer der ersten oder zweiten Kammer als Reaktion auf ein Befehlssignal zu steuern, um das Fahrzeug vollständig anzuheben oder abzusenken, wobei das Fahrzeug **dadurch gekennzeichnet ist, dass** das Verarbeitungsmittel konfiguriert ist, um das Absperrventil (V2, V3) zu steuern, um den hydraulischen Druckspeicher zu trennen, wenn ein Fahrzeughöhenwert einen ersten vorbestimmten Schwellenwert (Th1, Th2) erreicht.

2. Fahrzeug nach Anspruch 1, wobei der hydraulische Druckspeicher (ACC1) mit der ersten Kammer funktionell verbunden ist und wobei die erste Kammer eine Kolbenkammer ist und wobei die Verarbeitungseinrichtung (CU) konfiguriert ist, um den hydraulischen Druckspeicher zu trennen, wenn während der Fahrzeugabsenkphase der Höhenwert des Fahrzeugs den vorbestimmten Schwellenwert (Th1) erreicht.

3. Fahrzeug nach Anspruch 1, wobei der hydraulische Druckspeicher (ACC2) mit der zweiten Kammer funktionell verbunden ist und wobei die zweite Kammer eine Stangenkammer ist und wobei das Verarbeitungsmittel (CU) konfiguriert ist, um den hydraulischen Druckspeicher zu trennen, wenn während des Anhebens des Fahrzeugs der Fahrzeughöhenwert den vorbestimmten Schwellenwert (Th2) erreicht.

4. Fahrzeug nach Anspruch 2, ferner umfassend einen weiteren Hydraulikspeicher (ACC2), der funktionell mit der zweiten Kammer verbunden ist, und wobei die zweite Kammer eine Stangenkammer ist und wobei das Verarbeitungsmittel (CU) konfiguriert ist, um den Hydraulikspeicher und den weiteren Hydraulikspeicher zu trennen , wenn in der Absenkphase und in der Absenkphase des Fahrzeugs der Höhenwert des Fahrzeugs den vorbestimmten Schwellenwert (Th1, Th2) erreicht.

5. Fahrzeug nach Anspruch 2, wobei der Schwellenwert zwischen 5 % und 10 % des Wertes liegt, der der maximalen Höhe des Fahrzeugs entspricht.

6. Fahrzeug nach Anspruch 3, wobei der Schwellenwert zwischen 90 % und 95 % des Wertes liegt, der der maximalen Höhe des Fahrzeugs entspricht.

7. Fahrzeug nach einem der vorstehenden Ansprüche, wobei als Reaktion auf das Erreichen eines vollständigen Absenkens oder Anhebens des Fahrzeugs das Verarbeitungsmittel konfiguriert ist, um die vollständig zusammengezogene Kammer zwischen der ersten und zweiten Kammer mit der unter Druck stehenden hydraulischen Ölquelle (P) zu verbinden, bis eine minimal wahrnehmbare Änderung der Höhe des Fahrzeugs erfasst wird.

8. Fahrzeug nach Anspruch 7, ferner umfassend einen Positionssensor (PS) des Schafts des hydraulischen Stellantriebs, und wobei die Verarbeitungsmittel funktionell mit dem Positionssensor verbunden sind, um die minimal wahrnehmbare Variation der Fahrzeughöhe zu erfassen.

9. Fahrzeug nach einem der vorstehenden Ansprüche 1 bis 6, wobei als Reaktion auf das Erreichen des vollständigen Absenkens oder Anhebens des Fahrzeugs das Verarbeitungsmittel konfiguriert ist, um die zusammengezogene Kammer zwischen der ersten und zweiten Kammer zu verbinden und sie mit der Quelle von unter Druck stehendem Hydrauliköl (P) zu verbinden, bis ein vorbestimmter Druckwert innerhalb der zusammengezogenen Kammer erfasst wird.

10. Verfahren zum Betreiben eines landwirtschaftlichen Fahrzeugs und zum Steuern eines höhenverstellbaren hydraulischen Federungssystems des landwirtschaftlichen Fahrzeugs, wobei das Fahrzeug umfasst:
- einen doppeltwirkenden Stellantrieb (SA), umfassend eine erste (PC) und eine zweite Kammer (RC), die dazu angeordnet sind, sich abwechselnd auszudehnen und zusammenzuziehen, wodurch ein Anheben oder Absenken des Fahrzeugs bewirkt wird,
- eine Quelle für unter Druck stehendes Hydrauliköl (P),
- ein Ventil (V1) zum Steuern der abwechselnden Leistungsversorgung jeder der ersten und zweiten Kammer,
- Verbindungsmittel (L1, L2) zum Verbinden jeder der ersten und zweiten Kammer mit dem Steuerventil (V1),
- mindestens ein hydraulischer Druckspeicher (ACCC1, ACC2), der mit einer der ersten oder zweiten Kammer wirkverbunden ist,
- ein Absperrventil (V2, V3) zum Trennen des ersten hydraulischen Druckspeichers, wobei das Verfahren die folgenden Schritte umfasst:
- (Schritt 1) Empfangen eines Signals, das ein Anheben oder Absenken des Fahrzeugs anzeigt,
- (Schritt 2) Kontraktion einer der ersten oder zweiten Kammer als Reaktion auf den Empfang des Signals, wobei das Verfahren **gekennzeichnet ist durch** den folgenden Schritt:
- (Schritt 3) Trennung des hydraulischen Druckspeichers mittels des Absperrventils, wenn ein Fahrzeughöhenwert einen ersten vorbestimmten Schwellenwert (Th1, Th2) erreicht.

11. Verfahren nach Anspruch 10, ferner umfassend einen Verifizierungsschritt (CK1), dass der aktuelle Wert der Fahrzeughöhe sich von dem Wert unterscheidet, der dem vollständigen Anheben (oder Absenken) des Fahrzeugs zum Zeitpunkt des Empfangs des Signals entspricht, das das Anheben (oder Absenken) des Fahrzeugs anzeigt, und wobei der Kontraktionsschritt nur im Falle einer positiven Verifizierung ausgeführt wird.

12. Verfahren nach Anspruch 11, ferner umfassend einen Schritt (Schritt 4), nach dem vollständigen Anheben (oder Absenken) des Fahrzeugs, des Verbindens der zusammengezogenen Kammer zwischen der ersten und der zweiten Kammer mit der Quelle für unter Druck stehendes Hydrauliköl (P), bis eine minimal wahrnehmbare Änderung der Fahrzeughöhe erfasst wird.

13. Computerprogramm, umfassend Anweisungen, um das Verarbeitungsmittel des landwirtschaftlichen Fahrzeugs nach Anspruch 1 zu veranlassen, das Verfahrensmodell nach Anspruch 11 zu implementieren.

14. Computerlesbares Medium, auf dem das Programm nach Anspruch 13 gespeichert ist.

## Revendications

1. Véhicule agricole comprenant un système de suspension hydraulique réglable en hauteur comprenant
- un actionneur (SA) à double effet, comprenant une première (PC) et une seconde chambre (RC) agencées alternativement pour se dilater et se contracter, entraînant le levage ou l'abaissement du véhicule,
- une source d'huile hydraulique (P) sous pression,
- une vanne (V1) pour commander le raccordement alternatif de ladite première ou seconde chambre avec ladite source d'huile hydraulique (P),
- des moyens de raccordement (L1, L2) pour raccorder chacune desdites première et seconde chambres à ladite vanne de commande (V1),
- au moins un accumulateur hydraulique (ACCC1, ACC2) raccordé fonctionnellement à l'une desdites première ou seconde chambres,
- une vanne d'isolation (V2, V3) pour isoler ledit premier accumulateur hydraulique,
- Moyen de traitement (CU) configuré pour commander la contraction de l'une desdites première ou seconde chambres en réponse à un signal d'instruction pour lever ou abaisser complètement le véhicule, le véhicule étant **caractérisé en ce que** le moyen de traitement est configuré pour commander ladite vanne d'isolation (V2, V3), de manière à isoler ledit accumulateur hydraulique lorsqu'une valeur de hauteur de véhicule atteint un premier seuil prédéterminé (Th1, Th2).

2. Véhicule selon la revendication 1, dans lequel ledit accumulateur hydraulique (ACC1) est raccordé de manière fonctionnelle à ladite première chambre et dans lequel ladite première chambre est une chambre de piston, et dans lequel ledit moyen de traitement (CU) est configuré pour isoler ledit accumulateur hydraulique, lorsque, pendant la phase d'abaissement du véhicule, la valeur de hauteur du véhicule atteint ledit seuil prédéterminé (Th1).

3. Véhicule selon la revendication 1, dans lequel ledit accumulateur hydraulique (ACC2) est raccordé de manière fonctionnelle à ladite seconde chambre et dans lequel ladite seconde chambre est une chambre de tige, et dans lequel ledit moyen de traitement (CU) est configuré pour isoler ledit accumulateur hydraulique, lorsque, pendant le levage du véhicule, la valeur de hauteur du véhicule atteint ledit seuil prédéterminé (Th2).

4. Véhicule selon la revendication 2, comprenant en outre un accumulateur hydraulique (ACC2) supplémentaire raccordé de manière fonctionnelle à ladite seconde chambre et dans lequel ladite seconde chambre est une chambre de tige, et dans lequel ledit moyen de traitement (CU) est configuré pour isoler ledit accumulateur hydraulique et ledit accumulateur hydraulique supplémentaire lorsque, dans la phase d'abaissement et dans la phase d'abaissement du véhicule, la valeur de hauteur du véhicule atteint ledit seuil prédéterminé (Th1, Th2).

5. Véhicule selon la revendication 2, dans lequel ledit seuil est compris entre 5 % et 10 % de la valeur correspondant à la hauteur maximale du véhicule.

6. Véhicule selon la revendication 3, dans lequel ledit seuil est compris entre 90 % et 95 % de la valeur correspondant à la hauteur maximale du véhicule.

7. Véhicule selon l'une quelconque des revendications précédentes, dans lequel, en réponse à la réalisation d'un abaissement ou d'un levage complet du véhicule, ledit moyen de traitement est configuré pour raccorder la chambre complètement contractée, entre lesdites première et seconde chambres, avec ladite source d'huile hydraulique (P) sous pression jusqu'à ce qu'une variation minimale appréciable de la hauteur du véhicule soit détectée.

8. Véhicule selon la revendication 7, comprenant en outre un capteur de position (PS) de la tige dudit actionneur hydraulique et dans lequel ledit moyen de traitement est raccordé de manière fonctionnelle audit capteur de position pour détecter ladite variation minimale appréciable de la hauteur du véhicule.

9. Véhicule selon l'une quelconque des revendications 1 à 6 précédentes, dans lequel, en réponse à la réalisation dudit abaissement ou levage complet du véhicule, ledit moyen de traitement est configuré pour raccorder la chambre contractée, entre lesdites première et seconde chambres, et pour la raccorder à ladite source d'huile hydraulique (P) sous pression jusqu'à ce qu'une valeur de pression prédéterminée soit détectée à l'intérieur de la chambre contractée.

10. Procédé pour le fonctionnement d'un véhicule agricole et la commande d'un système de suspension hydraulique réglable en hauteur dudit véhicule agricole, le véhicule comprenant
- un actionneur (SA) à double effet, comprenant une première (PC) et une seconde chambre (RC) agencées alternativement pour se dilater et se contracter, entraînant le levage ou l'abaissement du véhicule,
- une source d'huile hydraulique (P) sous pression,
- une vanne (V1) pour commander l'alimentation en courant alternatif de chacune desdites première et seconde chambres,
- des moyens de raccordement (L1, L2) pour raccorder chacune desdites première et seconde chambres à ladite vanne de commande (V1),
- au moins un accumulateur hydraulique (ACCC1, ACC2) raccordé fonctionnellement à l'une desdites première ou seconde chambres,
- une vanne d'isolation (V2, V3) pour isoler ledit premier accumulateur hydraulique, le procédé comportant les étapes suivantes :
- (étape 1) réception d'un signal indiquant un levage ou un abaissement du véhicule,
- (étape 2) contraction de l'une desdites première ou seconde chambres en réponse à la réception dudit signal, le procédé étant **caractérisé par** l'étape suivante :
- (étape 3) isolation de l'accumulateur hydraulique, au moyen de ladite vanne d'isolation, lorsqu'une valeur de hauteur de véhicule atteint un premier seuil prédéterminé (Th1, Th2).

11. Procédé selon la revendication 10, comprenant en outre une étape de vérification (CK1) que la valeur actuelle de la hauteur de véhicule est différente de la valeur correspondant au levage (ou l'abaissement) complet du véhicule au moment de la réception dudit signal indiquant le levage (ou l'abaissement) du véhicule et, uniquement en cas de vérification positive, ladite étape de contraction est exécutée.

12. Procédé selon la revendication 11, comprenant en outre une étape (étape 4), suivant le levage (ou l'abaissement) complet du véhicule, consistant à raccorder la chambre contractée, entre lesdites première et seconde chambres, à ladite source d'huile hydraulique (P) sous pression jusqu'à ce qu'un changement minimal appréciable de hauteur de véhicule soit détecté.

13. Programme informatique comprenant des instructions permettant d'amener le moyen de traitement du véhicule agricole selon la revendication 1 à mettre en œuvre le modèle de procédé selon la revendication 11.

14. Support lisible par ordinateur, sur lequel est stocké le programme selon la revendication 13.
